# FASCICULE DE BREVET EUROPEEN

(11) **EP 0 457 644 B1**
(45) Date de publication et mention de la délivrance du brevet: **16.02.1994**
(21) Numéro de dépôt: 91401165.5
(22) Date de dépôt: 02.05.1991
(51) Int. Cl.: G01V 1/18, G01V 1/40

(54) **Système de réception d'ondes acoustiques pour puits permettant un découplage mécanique des capteurs**
Bohrlochempfängersystem für akustische Wellen zur mechanischen Entkopplung der Sensoren
Borehole receiver system for acoustic waves with mechanical decoupling of the sensors

(30) Priorité: 14.05.1990 FR 9006092
(43) Date de publication de la demande: 21.11.1991
(73) Titulaire: INSTITUT FRANCAIS DU PETROLE, 92502 Rueil-Malmaison (FR)
(72) Inventeur: Wittrisch, Christian, F-92500 Rueil-Malmaison (FR)

(56) Documents cités:
- FR-A- 2 079 559
- FR-A- 2 199 595
- FR-A- 2 564 599
- US-A- 4 578 785

## Description

La présente invention concerne un système de réception pour puits de production et notamment pour des puits produisant des effluents pétroliers, qui permet un découplage mécanique des capteurs. Le système de réception selon l'invention convient en particulier pour effectuer des mesures dans des puits où la progression est rendue difficile soit en raison de l'inclinaison plus ou moins forte du puits par rapport à la verticale, soit en raison de son étroitesse.

Les applications d'un tel système de réception sont nombreuses. On peut s'en servir pour détecter les vibrations générées dans la bande de fréquence audio, par les roches de formations géologiques lorsqu'elles sont soumises à des fracturations hydrauliques, durant les périodes de pompage qui suivent ces fracturations ou bien encore pendant une longue période de pompage en injection ou au cours de la production d'un puits. On peut utiliser cette sonde pour des opérations de prospection sismique impliquant le positionnement de capteurs dans un ou plusieurs puits. Un tel système de réception trouve encore ses applications dans la surveillance de terrains, d'ouvrages d'art ou de cavités de stockage etc ou bien encore pour la détection d'activités sismiques ou de tremblements de terre. D'une façon plus générale, le système de réception objet de l'invention peut être utilisé dans toutes les activités concernées où l'on a à capter des signaux acoustiques dans une bande de fréquence jusqu'à plusieurs milliers de hertz.

Un puits équipé pour la production pétrolière comporte généralement un tube de cuvelage communément désigné par casing, qui est descendu dans un forage et rendu solidaire des parois par injection de ciment dans l'espace annulaire entre lui et le puits. Dans la zone de production du puits, le casing est pourvu de perforations latérales communiquant avec les formations environnant le puits. Une colonne de production de section généralement très inférieure à celle du cuvelage ou casing, est descendue dans celui-ci. Un organe d'obturation est disposé à la base de la colonne et ferme l'espace annulaire entre elle et le casing.

La réalisation de mesures dans la zone de production peut se faire au moyen d'un outil standard de section relativement importante à condition de remonter au préalable la colonne de production mais cette solution est souvent écartée en raison des difficultés et retards qu'elle provoque.

On accède généralement à la zone de production souterraine en descendant dans le puits équipé une sonde ou un outil de section suffisamment faible pour passer à l'intérieur de la colonne de production et franchir les restrictions de section dues à divers organes d'obturation (tubing packers ou sièges de pompe par exemple). Des sondes mettant en oeuvre cette solution, sont décrits par exemple dans les brevets suivants : US 4 744 416, 4 737 636 ou 4 724 385.

La progression des sondes de section relativement réduite dans des zones de production ne présente pas de difficultés particulières lorsque les puits sont sensiblement verticaux et/ou bien dégagés. On peut donc envisager d'utiliser des sondes légères moins susceptibles d'affecter la réponse en fréquence des capteurs de mesure qui y sont inclus. Il reste cependant une autre difficulté qui est liée à la connexion permanente entre la sonde et le câble électro-porteur. Celui-ci, en raison de sa grande longueur, est soumis à des mouvements pendulaires ou bien agit comme transmetteur de vibrations parasites. La réponse des capteurs s'en trouve altérée et le rapport du signal au bruit est dégradé.

Par le brevet français No. 2 564 599 au nom du demandeur, on connait une sonde de mesure où les capteurs sont dans une nacelle légère suspendue sous une unité principale renfermant un système hydraulique d'ancrage, au moyen d'une liaison souple et bénéficiant donc d'un découplage mécanique favorable à une bonne réception des signaux à capter.

Cependant, l'utilisation des sondes mentionnées ci-dessus qu'il s'agisse de sondes légères ou d'une sonde à nacelle suspendue, est parfois impossible. Ceci se produit quand on doit faire des mesures dans des zones où la progression est gênée soit parce que le puits est partiellement obstrué soit encore que la sonde progresse dans des portions de puits plus ou moins inclinées par rapport à la verticale. Pour vaincre les forces de frottement accrues, on est amené à charger la sonde avec des masses rapportées. Cependant, cette solution présente beaucoup d'inconvénients. Les capteurs placés à l'intérieur de l'outil où sonde : géophones, accéléromètres et/ou hydrophones éventuellement, se trouvant en effet couplés mécaniquement avec un corps d'outil plus lourd ce qui a pour effet de détériorer le rapport du signal au bruit des signaux qu'ils captent.

Le système de mesure selon l'invention est adapté à être descendue dans un puits de section restreinte, et en particulier dans un puits ou la progression est gênée, sans pour autant avoir les inconvénients ci-dessus énoncés.

Le système selon l'invention comporte au moins une sonde reliée à une installation en surface par un câble électro-porteur multi-conducteurs et pourvue d'un corps de sonde de section réduite, des moyens d'ancrage comportant au moins un bras d'ancrage associé à des moyens moteurs, pour plaquer une zone d'application déterminée du corps de la sonde contre la paroi du puits, et des moyens capteurs. Le système de mesure selon l'invention, est caractérisé en ce que chaque corps de sonde est réalisé en deux parties, une première partie contenant les moyens capteurs et associée à des moyens de couplage autonomes permettant de coupler cette première partie avec la paroi du puits, et une deuxième partie reliée au câble électro-porteur et comportant ledit bras d'ancrage et les moyens moteurs, cette deuxième partie étant déplaçable par rapport à la première entre une position d'engagement où les deux parties sont solidaires en translation et une position de découplage où les deux parties sont découplées mécaniquement l'une de l'autre, chaque sonde comportant en outre des moyens de détection de la position de découplage des deux parties du corps.

En raison du découplage mécanique entre les deux parties de la sonde et du poids relativement faible de la première partie qui contient essentiellement les capteurs de mesure, on obtient une excellente réponse en fréquence, la bande de fréquence captée s'étendant de quelques Hertz jusqu'à 5000 Hz.

Les moyens de couplage de la première partie à la paroi du puits sont disposés par exemple d'un même côté de celle-ci de façon à mettre en opération cette première partie sensiblement en alignement avec la deuxième partie.

Quand le puits est équipé d'un tube de cuvelage, les moyens de couplage sont par exemple des moyens magnétiques.

Les moyens d'ancrage de la deuxième partie du corps peuvent comporter aussi des moyens magnétiques.

La deuxième partie de la sonde comporte par exemple un système électronique pour l'acquisition des signaux reçus par les moyens capteurs de la première partie et leur transmission, des moyens de liaison pour relier le système électronique aux capteurs, et des moyens de connexion des moyens d'acquisition à des conducteurs du câble électro-porteur.

Les moyens de liaison peuvent être constitués de fils conducteurs souples réunissant les deux parties du corps de la sonde.

Les moyens capteurs disposés dans la première partie de chaque sonde comportent par exemple des géophones et/ou des accéléromètres. Les moyens capteurs peuvent être directifs et leurs axes dirigés suivant une ou plusieurs directions de détection.

Les moyens capteurs comportent par exemple des géophones et/ou accéléromètres tri-axiaux.

Les moyens de réunion des deux parties du corps de chaque sonde comportent par exemple un manchon solidaire de la première partie, une tige pourvue d'une tête solidaire de la deuxième partie et déplaçable dans le manchon entre des positions d'engagement au contact de celui-ci et des positions de découplage sans contact avec lui.

Les moyens de positionnement angulaire des deux parties de la sonde l'une par rapport à l'autre comportent par exemple une pièce en saillie par rapport à la tige et une ouverture dans la paroi latérale du manchon pour recevoir la pièce en saillie, la forme de l'ouverture étant choisie pour solidariser en rotation les deux parties de la sonde dans leurs positions d'engagement l'une par rapport à l'autre.

Les moyens de détection des positions de découplage comportent par exemple un interrupteur assujetti à la tige et des moyens magnétiques déplaçables avec le manchon pour actionner l'interrupteur.

Chaque sonde peut être munie d'une paroi formant piston pour l'application d'une force propulsive au moyen d'un courant de fluide.

D'autres caractéristiques et avantages du système de mesure selon l'invention apparaîtront mieux à la lecture de la description ci-après de modes de réalisation décrits à titre d'exemples non limitatifs, en se référant aux dessins annexés où :
- la Fig.1 montre schématiquement la sonde de mesure descendue dans un puits équipé;
- la Fig.2 montre schématiquement la sonde de mesure;
- la fig.3 montre une disposition préférée des bras d'ancrage de la deuxième partie de la sonde;
- la Fig.4 montre en coupe transversale la forme des aimants disposés dans les deux parties de la sonde pour les plaquer contre un tube métallique, dans le cas d'un puits cuvelé avec un tel tube;
- la Fig.5 est une vue en coupe partielle de la sonde, montrant la disposition de la première et de la deuxième partie en position d'engagement l'une contre l'autre durant les phases de descente dans le puits, positionnées angulairement l'une par rapport à l'autre par une clavette de calage;
- la Fig.6 est une vue analogue montrant le positionnement des deux parties de la sonde durant les phases de remontée;
- la Fig.7 est une vue analogue dans une position intermédiaire où les deux parties sont découplées mécaniquement l'une par rapport à l'autre;
- la Fig.8 montre un exemple de réalisation de moyens de détection du découplage mécanique des deux parties de la sonde; et
- la Fig 9 montre un système de mesure de puits à plusieurs sondes.

La sonde de mesure 1 représentée sur les figures, est descendue dans un puits 2 à l'extrémité d'un câble électro-porteur 3. La sonde 1 comporte un corps réalisé en deux parties 4, 5 déplaçables l'une par rapport à l'autre. Le puits peut être équipé d'une colonne de production relativement étroite C maintenue en place par des moyens d'étanchéité B.

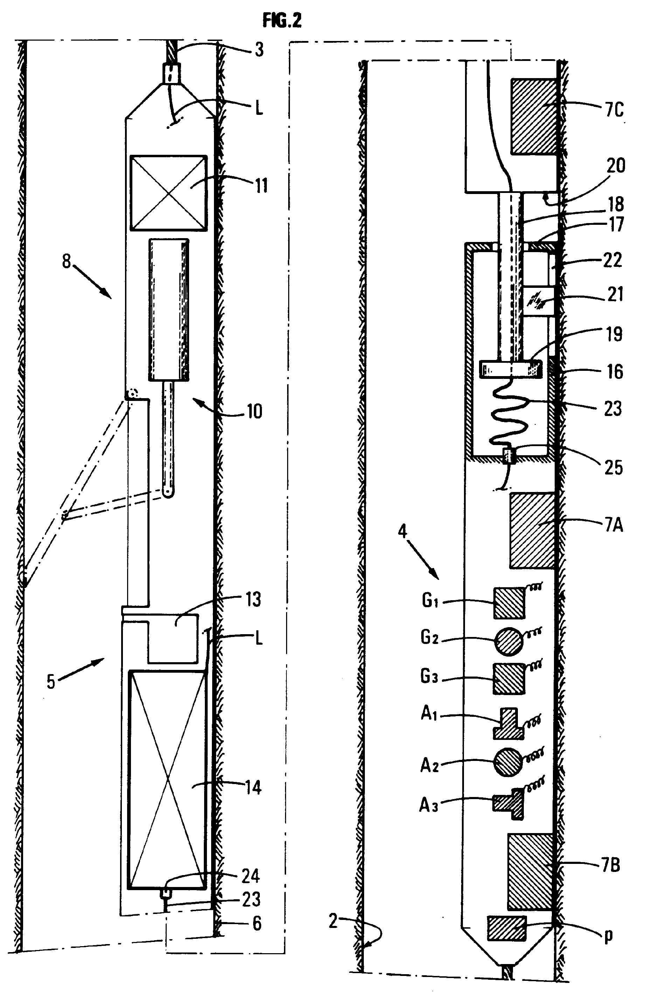

La première partie 4 comporte des logements pour des moyens capteurs qu'il s'agit de découpler pour éviter que leur réponse ne soit affectée par un couplage mécanique entre eux et la partie 5 du corps associée au câble électro-porteur 3. Ces moyens capteurs comportent par exemple au moins un géophone G et/ou au moins un accéléromètre A. Pour certaines applications, on dispose dans la première partie 4 (Fig. 2) trois géophones directifs G1, G2, G3 dont les axes sont orientés respectivement suivant trois directions orthogonales, ou bien un géophone tri-axial. On leur adjoint par exemples trois accéléromètres A1, A2, A3 dont les axes sont aussi orientés respectivement suivant trois directions orthogonales. La première partie 4 peut comporter aussi un logement pour un pendule P donnant à tout instant la valeur de l'angle d'inclinaison par rapport à la verticale.

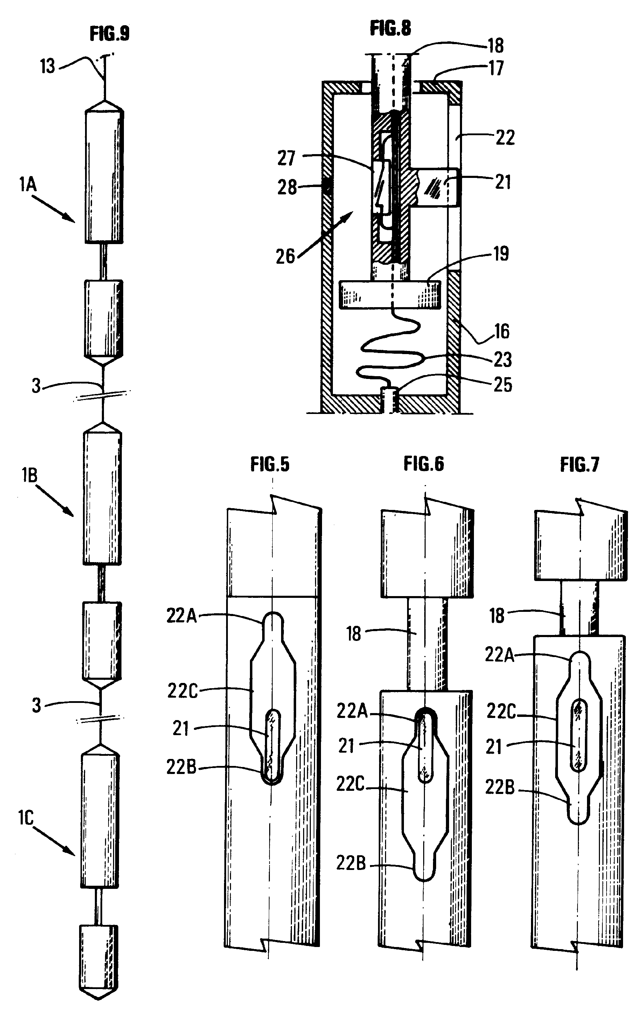

Des moyens de couplage sont associés à la première partie 4 pour la coupler avec le puits. Dans le cas fréquent où la sonde est descendue dans un puits cuvelé par un tube métallique 6, on utilise des moyens de couplage magnétiques par exemple. Ces moyens magnétiques comportent par exemple deux aimants 7A, 7B fixés d'un même côté de la première partie 4 et alignés de préférence suivant une même génératrice. Les aimants sont de préférence en fer à cheval (Fig. 4) et positionnés de manière que les lignes de champ magnétiques se referment à travers le tube de cuvelage 6. On utilise par exemple des aimants permanents faits avec des alliages peu sensibles à la désaimentation tels que des alliages au samarium-cobalt. On peut aussi employer des aimants permanents neutralisables sur commande par déplacement d'une pièce d'entrefer de manière que les lignes de force ne se referment plus au travers de la paroi du tube 6. ce type d'aimants permanents d'un type connu présente l'avantage de pouvoir être commuté au moyen de courants faibles.

On choisit des aimants dont la force de retenue contre la paroi du puits est de l'ordre de 5 à 10 fois la force de pesanteur de la première partie 4 de la sonde.

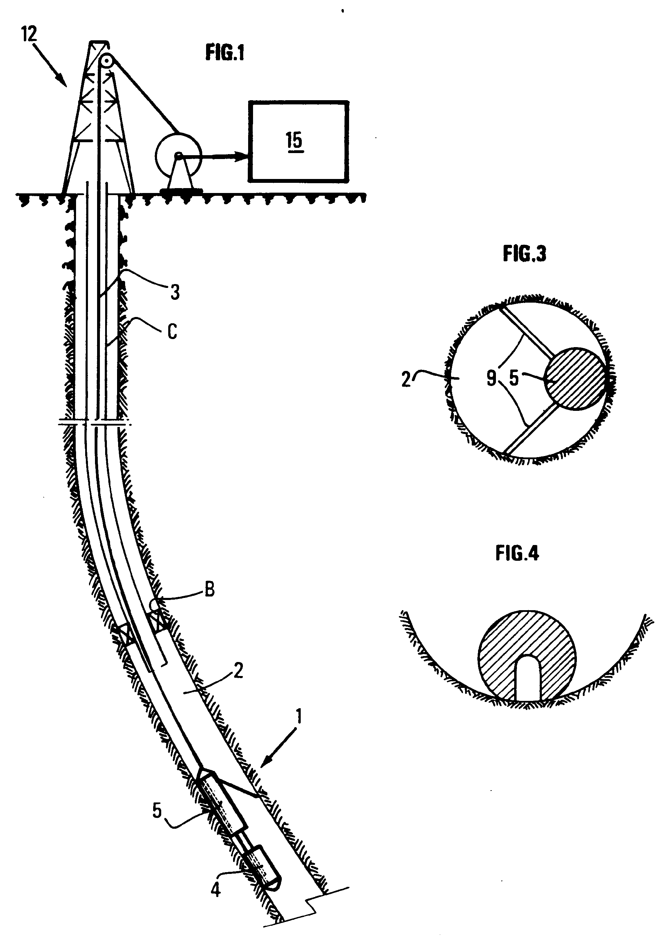

La deuxième partie 5 du corps comporte un système d'ancrage 8 permettant de l'immobiliser sur commande dans le puits. Ce système comporte au moins un bras mobile 9 pouvant pivoter par rapport au corps entre une position de rapprochement et une position écartée ou il vient s'appliquer contre la paroi. Le pivotement du bras 9 peut être commandé par action d'un vérin 10. Un ensemble de commande hydraulique 11 d'un type connu délivre du fluide sous pression pour actionner le bras 9. On peut utiliser par exemple l'ensemble de commande hydraulique décrit dans le brevet français 2 501 380 au nom du demandeur, qui est mu par un moteur électrique (non représenté) alimenté depuis une installation de surface 12 (Fig. 1) par des fils conducteurs du câble électro-porteur 3.

On utilise de préférence deux bras d'ancrage 9 suivant la disposition symétrique montrée à la Fig.2, de manière à mieux stabiliser et orienter la sonde en position d'ancrage.

La deuxième partie comporte aussi un compartiment 13 communiquant avec le puits, dans lequel sont placés d'autres capteurs tels qu'un hydrophone et/ou une sonde de température et/ou un manomètre (non représentés).

Vers son extrémité la plus proche de la première partie, la deuxième partie comporte encore un compartiment étanche dans lequel est disposé un système électronique 14 d'un type connu assurant les fonctions de commande, d'acquisition de signaux et de contrôle des transmissions avec un laboratoire central 15 (Fig. 1) en surface. On peut utiliser par exemple le système électronique pour sondes de puits décrit dans les brevets français No. 2 613 496 et 2 616 230 au nom du demandeur. Un câble multi-conducteurs L le relie au câble électro-porteur 3.

De préférence, pour une utilisation dans un puits cuvelé, la deuxième partie 5 comporte un moyen de couplage magnétique 7C analogue aux aimants 7A, 7B et disposé sur le côté de celle-ci qui vient au contact de la paroi du puits quand le ou les bras d'ancrage 9 sont ouverts.

Un manchon cylindrique 16 terminé par une restriction de section 17, est fixé à une extrémité de la première partie 4 du corps. Une tige 18 pourvue d'une tête 19 renflée prolonge suivant son axe la deuxième partie du corps 5. La section de la tête 19 est inférieure à la section intérieure du manchon 16 mais supérieure à celle de la restriction 17, et celle de la tige 18 est inférieure à celle de la restriction 17. De plus la longueur de la tige 18 et de sa tête 19 est inférieure à la profondeur intérieure du manchon 16. Les deux parties 4, 5 sont déplaçables l'une par rapport à l'autre entre une position de rapprochement où la paroi terminale 20 vient en appui sur la restriction 17 et une position d'éloignement où la tête 19 est retenue par la restriction 17. Les sections des pièces emboitées sont choisies de manière que, dans des positions intermédiaires entre les deux positions extrêmes définies ci-dessus, les deux parties de la sonde ne se touchent pas quand elles sont sensiblement en alignement.

La sonde 1 comporte de préférence des moyens de positionnement angulaire pour maintenir le positionnement angulaire des deux parties l'une par rapport à l'autre. Ces moyens de positionnement angulaire comportent par exemple une clavette allongée 21 fixée radialement à la tige 18 et de dimension radiale suffisante pour venir s'engager dans une lumière allongée 22 (Fig. 5 à 7) pratiquée dans le manchon cylindrique suivant une génératrice. Comme on le voit sur les fig. 5 à 7, la largeur de cette lumière 22 correspond sensiblement à celle de la clavette 21 vers ses deux extrémités 22A, 22B,et elle est plus large dans sa partie intermédiaire 22C. Dans les positions extrêmes de rapprochement et d'éloignement des deux parties 4, 5, la clavette 21 se trouve automatiquement centrée par rapport à la lumière 22, alors que dans la position intermédiaire, il n'y a aucun contact entre elles.

Les fils conducteurs associés aux moyens capteurs sont connectés par exemple à un ou plusieurs câbles de transmission multi-lignes 23 traversant l'espace entre le fond du manchon 16 et la tête 19 et rejoignant le système électronique par un canal axial le long de la tige 18. L'isolement électrique des compartiments contenant les capteurs dans la partie 4 et le système électronique dans la partie 5, est assuré par des traversées étanches 24, 25. La portion du câble multi-lignes entre la tête 19 et le fond du manchon 16 est suffisamment lâche pour éviter tout couplage mécanique entre les deux parties 4, 5 de la sonde 1 par son intermédiaire. Le couplage résiduel éventuel est d'autant plus faible que l'on a choisi pour coupler la partie basse 4 de la sonde, des aimants à action permanents ou bien des aimants déclenchables par des courants faibles, ce qui permet de n'utiliser que des conducteurs de faible section et donc très souples.

La sonde comporte aussi des moyens de détection 26 de la position intermédiaire de découplage mécanique des deux parties 4, 5 de la sonde. Ces moyens peuvent être constitués par un interrupteur à lames souples (I.L.S) 27 (Fig. 8) coopérant avec un aimant (28). L'interrupteur 27 est disposé par exemple le long de la tige 18 (Fig.8). L'aimant qui peut le fermer est fixé par exemple dans la paroi du manchon. L'emplacement de l'aimant 28 relativement à l'interrupteur 27, est choisi de manière que la fermeture de l'interrupteur ne se produise que pour une position intermédiaire des deux parties 4, 5 de la sonde où aucun contact mécanique ne subsiste.

La masse de la première partie 4 qui ne contient que les moyens capteurs et les aimants de couplage 7A, 7B est en général bien plus faible que celle de la deuxième partie supérieure 5. Dans tous les cas, on calcule le poids de la partie supérieure pour 5 qu'il soit supérieur aux forces de frottement et/ou éventuellement des forces magnétiques permanentes plaquant la première partie inférieure 4 contre le cuvelage 6 du puits. Si le poids s'avère insuffisant compte-tenu des forces de retenue rencontrées, on peut fixer des masses additionnelles (non représentées) au câble électro-porteur au-dessus de la partie supérieure de la sonde. On arrive ainsi à faire progresser la sonde dans des portions de puits dont l'inclinaison peut atteindre 40 ou 50° par rapport à la verticale et même davantage.

La sonde est mise en place de la façon suivante.

On commence de préférence par faire descendre la sonde jusqu'à la profondeur maximale d'intervention. Dans les parties sensiblement verticales ou bien dégagées du puits, la première partie est en position de suspension ou d'écartement par rapport à la deuxième partie au-dessus (Fig 7). Si la progression de la première partie de la sonde est gênée, la partie supérieure vient en appui sur la partie terminale du manchon 16 (Fig. 5). L'effort de poussée est encore accru du fait du poids et de la relative rigidité du câble électro-porteur 3. De cette façon, on peut faire progresser la partie basse de la sonde jusque dans des portions de puits relativement inclinées. Le positionnement angulaire des deux parties de la sonde l'une par rapport à l'autre, est assuré par la clavette 21 et de la lumière 22 (Fig. 5 et 7).

On procède ensuite à la remontée de la sonde avec des arrêts successivement en une pluralité d'emplacements de mesure le long du puits. Durant les étapes de remontée, la restriction 17 du manchon 16 est en appui sur la tête 19. De la même façon, le positionnement angulaire des deux parties de la sonde est maintenu par interaction de la clavette 21 et de la lumière 22 (Fig ).

Une fois chaque position de mesure atteinte et la partie basse 4 étant immobilisée par rapport au puits, par ses moyens de couplage 7A, 7B, après un déclenchement le cas échéant, on redescend légèrement la deuxième partie 5 (ou partie haute) de la sonde 1 de manière à obtenir la position intermédiaire sans couplage mécanique recherchée (cf. Fig. 2 et 7). L'opérateur en surface repère cette position intermédiaire par un voyant de contrôle relié aux moyens de détection 26 tels que ceux montrés à la Fig.8. On peut alors procéder aux mesures.

Suivant le mode de réalisation de la Fig.9, on peut utiliser un système de mesure comportant plusieurs sondes en deux parties (1A, 1B, 1C... ) telles que celles qui viennent d'être décrites, ces sondes étant interconnectées par des portions de câble 3 électro-porteur. En chaque emplacement choisi pour faire les mesures, on procède au positionnement successif de chacune des sondes en commençant par la plus basse (sonde 1C puis sonde 1B puis sonde 1A dans le cas d'un système à trois sondes), et selon la méthode définie ci-dessus.

D'autres variantes peuvent être envisagées sans sortir du cadre de l'invention.

L'aimant permanent 7C peut être remplacé par un électro-aimant éventuellement.

Si un couplage mécanique résiduel plus important entre les deux parties de la sonde est admissible, on peut les relier par un câble de liaison avec des conducteurs de plus forte section et dans ce cas, les aimants permanents tels que 7A, 7B peuvent être remplacés par des électro-aimants.

On peut aussi remplacer les moyens magnétiques de couplage par des moyens mécaniques dans le cas où l'on opère dans des puits non cuvelés. Ces moyens mécaniques peuvent être par exemple un ou plusieurs bras d'ancrage à ressort déclenchables (1) à la fin de la phase initiale de descente, qui maintiennent la partie basse de la sonde 4 en appui contre la paroi du puits.

Dans le mode de réalisation décrit, la progression de la sonde s'effectue par l'effet de la gravité. On ne sortirait pas du cadre de l'invention en lui combinant une force propulsive obtenue par un courant de fluide appliqué à un organe d'étanchéité annulaire tel qu'un ensemble de coupelles, disposé autour de la partie basse de la sonde.

## Revendications

1. Système de réception pour puits comportant des moyens capteurs, au moins une sonde (1) reliée à une installation en surface (12) par un câble électro-porteur multi-conducteurs (3) et pourvue d'un corps de sonde de section réduite, chaque corps de sonde étant réalisé en deux parties (4, 5), une première partie (4) contenant les moyens capteurs étant associée à des moyens de couplage autonomes (7A, 7B) permettant de coupler cette première partie (4) avec la paroi du puits, et une deuxième partie (5) reliée au câble électro-porteur (3), et pourvu d'au moins un bras d'ancrage (9) cette deuxième partie contenant des moyens moteurs (10, 11), pour plaquer une face d'application déterminée du corps de la sonde contre la paroi du puits, par ouverture du bras d'ancrage, caractérisé en ce que la deuxième partie (5) est reliée à la première partie (4) par des moyens de réunion (16-19) comportant deux pièces rigides déplaçables l'une par rapport à l'autre entre des positions d'engagement où les deux pièces (4, 5) sont solidaires en translation et des positions de découplage où les deux parties (4, 5) sont découplées mécaniquement l'une de l'autre, chaque sonde comportant en outre des moyens de détection (26) d'au moins une position de découplage des deux parties (4, 5) du corps.

2. Système de réception selon la revendication 1, caractérisé en ce que les moyens de couplage (7A, 7B) de la première partie (4) à la paroi du puits sont d'un même côté de celle-ci de façon à mettre en opération ladite première partie (4), sensiblement en alignement avec la deuxième partie (5).

3. Système de réception selon l'une des revendications 1 ou 2, caractérisé en ce que, le puits (2) étant équipé d'un tube de cuvelage (6), les moyens de couplage comportent des moyens magnétiques.

4. Système de réception selon la revendication 3, caractérisé en ce que les moyens d'ancrage de la deuxième partie du corps comportent aussi des moyens magnétiques (7C).

5. Système de réception selon l'une des revendications précédentes, caractérisé en ce que chaque sonde comporte des moyens (21, 22) de positionnement angulaire des deux parties (4, 5) de la sonde l'une par rapport à l'autre.

6. Système de réception selon l'une des revendications précédentes, caractérisé en ce que la deuxième partie (5) de la sonde comporte par exemple un système électronique (14) pour l'acquisition des signaux reçus par les moyens capteurs de la première partie et leur transmission (4), des moyens de liaison (25) pour relier le système électronique aux moyens capteurs, et des moyens de connexion (L) du système électronqiue à des conducteurs du câble électro-porteur (3).

7. Système de réception selon l'une des revendications précédentes, caractérisé en ce que les moyens (25) de liaison comportent des fils conducteurs souples réunissant les deux parties (4, 5) du corps de la sonde.

8. Système de réception selon l'une des revendications précédentes, caractérisé en ce que les moyens capteurs disposés dans la première partie de chaque sonde comportent par exemple des géophones (G) et/ou des accéléromètres (A).

9. Système de réception selon la revendication précédente, caractérisé en ce que les moyens capteurs sont directifs et leurs axes dirigés suivant une ou plusieurs directions de détection.

10. Système de réception selon la revendication 8, caractérisé en ce que les moyens capteurs comportent des géophones tri-axiaux (G1-G3) et/ou des accéléromètres tri-axiaux.

11. Système de réception selon l'une des revendications précédentes, caractérisé en ce que les moyens de réunion (16-19) des deux parties (4, 5) du corps de chaque sonde (1) comportent un manchon (16) solidaire de la première partie (4), une tige (18) pourvue d'une tête (19) solidaire de la deuxième partie (5) et déplaçable dans le manchon (16) entre des positions d'engagement au contact de celui-ci et des positions de découplage sans contact avec lui.

12. Système de réception selon la revendication précédente, caractérisé en ce que les moyens de positionnement angulaire des deux parties de la sonde l'une par rapport à l'autre comportent une pièce en saillie (21) par rapport à ladite tige (18) et une ouverture (22) dans la paroi latérale du manchon pour recevoir la pièce en saillie, la forme de l'ouverture (22) étant choisie pour solidariser en rotation les deux parties (4, 5) de la sonde dans leurs positions d'engagement l'une par rapport à l'autre.

13. Système de réception selon l'une des revendications précédentes, caractérisé en ce que les moyens de détection (26) des positions de découplage comportent un interrupteur (27) assujetti à la tige (18) et des moyens magnétiques (28) déplaçables avec le manchon (16) pour actionner l'interrupteur (27).

14. Système de réception selon l'une des revendications précédentes, caractérisé en ce que chaque sonde est munie d'une paroi pour l'application d'une force propulsive au moyen d'un courant de fluide.

## Patentansprüche

1. Empfängersystem für Bohrlöcher, das umfaßt: Empfängermittel, wenigstens eine mit einer Oberflächeninstallation (12) über ein Elektroträgermehrleiterkabel (3) verbundene Sonde (1) welche mit einem Sondenkörper verminderten Querschnitts versehen ist, wobei jeder Sondenkörper aus zwei Teilen (4,5) hergestellt ist, einem ersten Teil (4), der die Empfängermittel enthält und autonomen Kopplungsmitteln (7a, 7b) zugeordnet ist, die es ermöglichen, diesen ersten Teil (4) mit der Bohrlochwandung zu verbinden und einem zweiten Teil (5), der mit dem Elektroträgerkabel (3) verbunden und mit wenigstens einem Verankerungsarm (9) versehen ist, wobei dieser zweite Teil Antriebsmittel (10, 11) enthält, um eine bestimmte Anlagefläche des Sondenkörpers gegen die Wandung des Bohrlochs über die Öffnung des Verankerungsarms zu pressen, dadurch gekennzeichnet, daß der zweite Teil (5) mit dem ersten Teil (4) über Wiedervereinigungsmittel (16-19) verbunden ist, die zwei steife Teilstücke umfassen, die bezüglich einander zwischen Freigabepositionen umfassen, wo die beiden Teilstücke (4,5) in Translation fest sind und Entkopplungsstellungen beweglich sind, wo die beiden Teile (4,5) mechanisch voneinander entkoppelt werden, wobei jede Sonde im übrigen Detektormittel (26) für wenigstens eine Entkopplungsposition der beiden Teile (4, 5) des Körpers umfaßt.

2. Empfängersystem nach Anspruch 1, dadurch gekennzeichnet, daß die Kopplungsmittel (7a, 7b) des ersten Teilstücks (4) mit der Wandung des Bohrlochs auf ein und der gleichen Seite hiervon derart angeordnet sind, daß dieser erste Teil (4) im wesentlichen ausgerichtet mit dem zweiten Teil (5) in Betrieb genommen wird.

3. Empfängersystem nach einem der Ansprüche 1 oder 2, dadurch gekennzeichnet, daß das Bohrloch (2) mit einem Ausbaurohr (6) ausgestattet ist, wobei die Kopplungsmittel magnetische Mittel umfassen.

4. Empfängersystem nach Anspruch 3, dadurch gekennzeichnet, daß die Verankerungsmittel des zweiten Teils des Körpers auch magnetische Mittel (7c) umfassen.

5. Empfängersystem nach einem der vorhergehenden Ansprüche, dadurch gekennzeichnet, daß jede Sonde Mittel (21, 22) zur Winkelpositionierung der beiden Teile (4, 5) der Sonde bezüglich einander umfaßt.

6. Empfängersystem nach einem der vorhergehenden Ansprüche, dadurch gekennzeichnet, daß der zweite Teil (5) der Sonde beispielsweise ein elektronisches System (14) zur Erfassung der Signale umfaßt, die von den Empfängern des ersten Teils empfangen wurden, sowie für deren Übertragung (4) Verbindungsmittel (25) umfaßt, um das elektronische System mit den Empfängermitteln zu verbinden und Verbindungsmittel (L) des elektronischen Systems mit Leitern des Elektroträgerkabels (3).

7. Empfängersystem nach einem der vorhergehenden Ansprüche, dadurch gekennzeichnet, daß die Verbindungs- oder Verknüpfungsmittel (25) leitende nachgiebige Drähte umfassen, welche die beiden Teile (4,5) des Sondenkörpers vereinigen.

8. Empfängersystem nach einem der vorhergehenden Ansprüche, dadurch gekennzeichnet, daß die im ersten Teil jeder Sonde angeordneten Empfängermittel beispielsweise Geophone (G) und/oder Beschleunigungsmeßgeräte (A) umfassen.

9. Empfängersystem nach dem vorhergehenden Anspruch, dadurch gekennzeichnet, daß die Empfängermittel solche mit Richtcharakteristik sind und ihre Achsen gemäß einer oder mehreren Erfassungsrichtungen ausgerichtet sind.

10. Empfängersystem nach Anspruch 8, dadurch gekennzeichnet, daß die Empfängermittel 3-axiale Geophone (G1-G3) und/oder 3-axiale Beschleunigungsmesser umfassen.

11. Empfängersystem nach einem der vorhergehenden Ansprüche, dadurch gekennzeichnet, daß die Vereinigungsmittel (16, 19) der beiden Teile (4, 5) des Körpers jeder Sonde (1) umfassen: eine fest mit dem ersten Teil (4) verbundene Hülse (16), eine mit einem Kopf (19) versehene Stange (18), wobei ersterer fest mit dem zweiten Teil (5) und in der Hülse (16) zwischen Eingriffsstellungen in Kontakt mit dieser und Entkopplungsstellungen ohne Kontakt mit dieser bewegbar ist.

12. Empfängersystem nach dem vorhergehenden Anspruch, dadurch gekennzeichnet, daß die Winkelpositionsmittel der beiden Teile der Sonde bezüglich einander ein bezüglich der Stange (18) vorstehendes Stück (21), sowie eine Öffnung (22) in der Seitenwand der Hülse aufweisen, um das vorstehende Teil aufzunehmen, wobei die Form der Öffnung (22) gewählt ist, um die beiden Teile (4,5) der Sonde in ihren Eingriffspositionen bezüglich einander drehfest zu machen.

13. Empfängersystem nach einem der vorhergehenden Ansprüche, dadurch gekennzeichnet, daß die Detektormittel (26) für die Entkopplungspositionen einen Unterbrecher (27) umfassen, der an der Stange (18) befestigt ist, sowie magnetische Mittel (28), die mit der Hülse (16) zur Betätigung des Unterbrechers (27) verschiebbar oder bewegbar sind.

14. Empfängersystem nach einem der vorhergehenden Ansprüche, dadurch gekennzeichnet, daß jede Sonde mit einer Wandung zur Beaufschlagung mit einer Vortriebskraft vermittels eines Fluidstroms versehen ist.

## Claims

1. A reception system for well bores comprising sensing means, at least one sonde (1) connected to a surface installation (12) by a multi-conductor electric cable (3) and fitted with a sonde body with a reduced section, each sonde body being made of two parts (4, 5), wherein a first part (4) contains the sensing means associated with autonomous coupling means (7A, 7B) enabling this first part (4) to be coupled with the wall of the well, and a second part (5) connected to the electric cable (3) and provided with at least one fixing arm (9), wherein this second part contains motor means (10, 11) for applying a given application surface of the body of the sonde to the wall of the well when the fixing arm opens, characterised in that the second part (5) is connected to the first part (4) by connecting means (16-19) having two rigid parts movable in relation to each other between engaged positions in which the two parts (4, 5) are coupled in translation and uncoupled positions in which the two parts (4, 5) are mechanically uncoupled from each other, each sonde also having means (26) for detecting at least one uncoupling position of the two parts (4, 5) of the body.

2. A reception system in accordance with claim 1, characterised in that the means (7A, 7B) for coupling the first part (4) with the wall of the well are on a same side of the latter so that they may bring the first part (4) into operation substantially in alignment with the second part (5).

3. A reception system in accordance with one of the claims 1 or 2, characterised in that if the well (2) is fitted with a lining tube (6), the coupling means have magnetic means.

4. A reception system in accordance with claim 3, characterised in that the fixing means of the second part of the body also have magnetic means (7C).

5. A reception system in accordance with one of the previous claims, characterised in that each sonde has means (21, 22) for angularly positioning the two parts (4, 5) of the sonde in relation to each other.

6. A reception system in accordance with one of the previous claims, characterised in that the second part (5) of the sonde has, for example, an electronic system (14) for collecting and transmitting signals received by the sensing means of the first part (4), connecting means (25) to link the electronic system to the sensing means and means for connecting (L) the electronic system to the conductors in the electric cable (3).

7. A reception system in accordance with one of the previous claims, characterised in that the connecting means (25) have flexible conducting wires connecting the two parts (4, 5) of the sonde body.

8. A reception system in accordance with one of the previous claims, characterised in that the sensing means located in the first part of each sonde have, for example, geophones (G) and/or accelerometers (A).

9. A reception system in accordance with the previous claim, characterised in that the sensing means are directional and their axes are directed along one or several detecting directions.

10. A reception system in accordance with claim 8, characterised in that the sensing means comprise tri-axial geophones (G1-G3) and/or tri-axial accelerometers.

11. A reception system in accordance with one of the previous claims, characterised in that the connecting means (16-19) of the two parts (4, 5) of the body of each sonde (1) have a sleeve (16) integral with the first part (4), a rod (18) provided with a head (19) integral with the second part (5) and movable inside the sleeve (16) between the engaged positions in contact with the sleeve and the uncoupled positions in which there is no contact.

12. A reception system in accordance with the previous claim, characterised in that the means for providing angular positioning of the two parts of the sonde in relation to each other have a part (21) that is salient in relation to the rod (18) and an opening (22) in the lateral wall of the sleeve to house the salient part, the shape of the opening (22) being selected so as to unite the two parts (4, 5) of the sonde in rotation in the position in which they are engaged with each other.

13. A reception system in accordance with one of the previous claims, characterised in that the means (26) for detecting the uncoupled positions have a switch (27) fixed to the rod (18) and magnetic means (28) that are movable with the sleeve (16) so as to activate the switch (27).

14. A reception system in accordance with one of the previous claims, characterised in that each sonde is provided with a wall so that a propulsion force may be applied by a fluid current.
